# DEMANDE DE BREVET EUROPEEN

(11) **EP 1 046 531 A1**
(43) Date de publication de la demande: **25.10.2000**
(21) Numéro de dépôt: 00401078.1
(22) Date de dépôt: 18.04.2000
(51) Int. Cl.: B60J 7/06, B60J 5/06

(54) **Profilé comprenant une piste de roulement, plate-forme comprenant un tel profilé et véhicule industriel comprenant une plate-forme avec un tel profilé**

(30) Priorité: 20.04.1999 FR 9904992
(71) Demandeur: General Trailers France, 91042 Evry Cedex (FR)
(72) Inventeur: Gressier, Christophe, 59251 Allenes les Marais (FR)
(74) Mandataire: Michelet, Alain

(57) **Abrégé**

L'invention concerne un profilé pour une plate-forme d'un véhicule industriel comprenant une piste de roulement. La piste comprend une semelle dure (7) constituée par un élément rapporté plat.

## Description

L'invention concerne un profilé comprenant une piste de roulement, une plate-forme comprenant au moins un tel profilé et un véhicule industriel comprenant une plate-forme avec un tel profilé.

L'invention s'applique plus particulièrement à des véhicules industriels ayant une plate-forme surmontée d'une structure coulissante ou d'un bâti comprenant des éléments coulissants. Ces véhicules industriels peuvent être des camions, appelés porteurs, des remorques ou des semi-remorques. Les plates-formes de tels véhicules sont pourvues d'une piste de roulement, appelée aussi chemin de roulement, sur laquelle se déplacent les éléments coulissants. Cette piste est exposée à une usure dont l'envergure ne dépend pas seulement de la fréquence de déplacements des éléments coulissants, mais qui dépend aussi de la dureté de la surface de la piste. L'envergure de l'usure dépend aussi du poids et de la nature des éléments coulissants.

Compte-tenu des grandes dimensions des plate-formes et de la flexibilité nécessaire qui en résulte pour elles, le matériau des plate-formes ne peut pas être trop dur, ni en profondeur, ni en surface. La piste de roulement, par contre doit avoir une dureté de surface très grande pour éviter un matage de la surface. Rappelons que le matage n'est pas causé uniquement par le mouvement des éléments coulissants lors de leur déploiement ou de leur rassemblement, mais qu'il est causé également, voire localement aggravé, notamment pendant la marche du véhicule, par des mouvements tels qu'un basculement d'avant en arrière des éléments coulissants dû à leur hauteur ou un mouvement de va-et-vient « sur place » de ces éléments du fait qu'ils ne sont pas arrêtés sur la plate-forme.

Jusqu'à maintenant, on a résolu ce problème en utilisant des rails en acier, quel que soit le matériau de la plate-forme.

Toutefois, l'utilisation de rails rapportés implique leur fixation à la plate-forme par vissage, soudage, ou tout autre procédé approprié. Ceci représente un travail assez important au moment de la construction du véhicule et nécessite des inspections et des travaux d'entretien, voire un remplacement des rails, au cours de l'utilisation du véhicule.

Le but de l'invention est de simplifier la conception des plates-formes comprenant une piste de roulement quel que soit le matériau en lequel la plate-forme est réalisée et quel que soit le nombre de profilés ou éléments, soit un seul, soit plusieurs, qui constituent la plate-forme.

Le but de l'invention est atteint par un profilé pour une plate-forme d'un véhicule industriel, ce profilé comprenant au moins une piste de roulement et la (ou les) piste(s) comprenant une semelle dure, constituée par un élément rapporté plat.

Cette disposition est basée sur l'observation que dans les solutions utilisées jusqu'à maintenant, notamment lors de l'utilisation de rails, seule la partie horizontale du rail sur laquelle les galets se déplacent est exposée au danger d'usure. En conséquence, il est plus raisonnable de réaliser la partie de la plate-forme où se situe la piste de roulement, sous la forme d'un profilé et de revêtir la piste de roulement d'une semelle ayant la dureté nécessaire et qui, de plus, peut être remplacée facilement.

Cette solution est particulièrement intéressante pour la construction de véhicules industriels dont la plate-forme est en aluminium. Elle montre qu'il est bien faisable, dans le domaine de la construction de véhicules industriels, de réaliser des éléments mécaniques en deux matériaux différents, par exemple en un matériau non ductile (l'aluminium) et un matériau ductile (l'acier) sans qu'il y ait des problèmes tels que la création d'éléments galvaniques.

Il est bien entendu possible d'appliquer l'invention aussi à des véhicules industriels dont la plate-forme est réalisée en acier, car les plates-formes en acier ne peuvent pas avoir une dureté aussi grande, sur toute l'étendue de la plate-forme, que celle exigée pour la piste de roulement.

Cette solution s'applique également à des bords de plate-forme pourvus de deux pistes superposées, l'une pour le (ou les) galet(s) supérieur(s) et l'autre pour le(s) galet(s) inférieur(s) d'un élément coulissant.

L'invention concerne également les caractéristiques ci-après, considérées isolément ou selon toutes leurs combinaisons techniquement possibles:
- la semelle est insérée dans une partie en retrait du profilé;
- le profilé est pourvu, le long de la piste, d'une rainure ouverte vers la piste pour recevoir un bord longitudinal de la semelle;
- la semelle est fixée dans la partie en retrait du profilé par un profil clip;
- la semelle est en un matériau ductile;
- la semelle est en inox;
- le profilé est en aluminium et la semelle est en un matériau ductile.

Le but de l'invention est également atteint par une plate-forme pour un véhicule industriel, comprenant au moins une rive pourvue d'une piste de roulement.

Conformément à l'invention, la piste de cette plate-forme comprend une semelle dure constituée par un élément rapporté plat.

Cette semelle est fabriquée de préférence en un matériau ductile.

Le but de l'invention est également atteint par une plate-forme industrielle comprenant au moins une rive pourvue d'une piste de roulement.

Conformément à l'invention, la rive est réalisée sous la forme d'un profilé ayant les caractéristiques décrites plus haut.

Le but de l'invention est aussi atteint par un véhicule industriel comprenant une plate-forme avec deux rives dont au moins une est pourvue d'une piste de roulement, la piste de roulement comprenant une semelle dure constituée par un élément rapporté plat.

Le but de l'invention est atteint par ailleurs par un véhicule industriel comprenant une plate-forme avec deux rives dont au moins une est pourvue d'une piste de roulement, la rive ou les rives étant réalisées sous la forme d'un profilé ayant les caractéristiques décrites plus haut.

D'autres caractéristiques et avantages de l'invention ressortiront de la description d'un mode de réalisation en référence aux dessins. Dans ces dessins:

La Figure 1 représente un profilé selon l'invention avec un élément de fixation en cours de mise en place.

La Figure 2 représente le profilé de la Figure 1, l'élément de fixation étant mis en place.

La Figure 3 représente le profilé de la Figure 1 sans élément de fixation, mais avec le pied d'un élément coulissant pourvu de galets.

La Figure 4 représente de façon très schématique une plate-forme dont les rives droite et gauche sont constituées par un profilé selon l'invention.

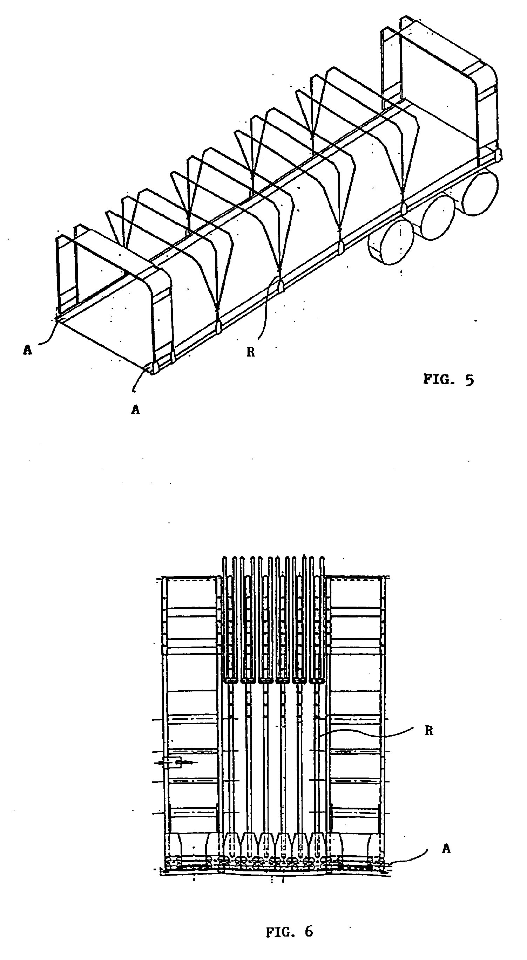

La Figure 5 représente une semi-remorque avec une structure coulissante déployée, et

La Figure 6 représente une partie d'un plateau d'un véhicule industriel, les éléments coulissants étant rassemblés à une extrémité de la plate-forme.

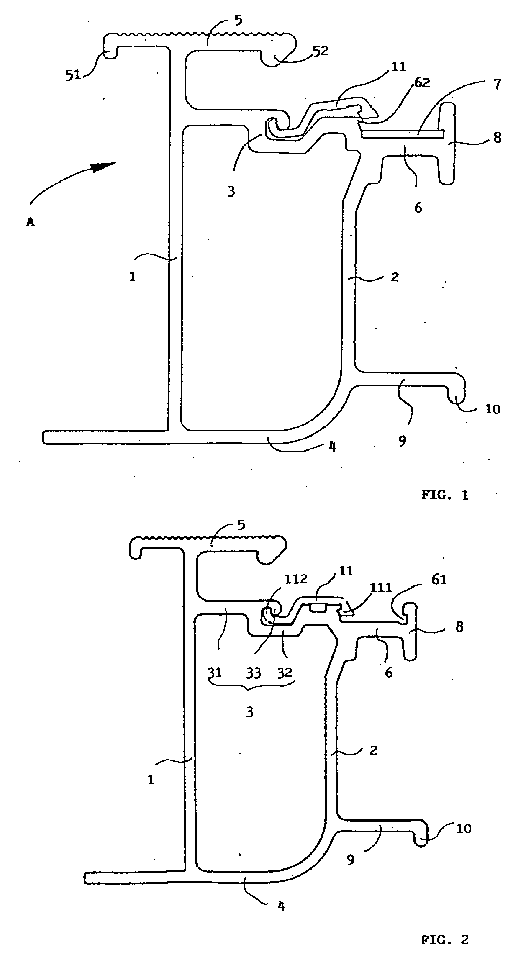

Le profilé de rive latérale représenté sur la Figure 1 comprend des parois verticales 1, 2 et des parois horizontales 3, 4 formant approximativement une poutre de section transversale rectangulaire. Selon la position d'utilisation du profilé, les parois verticales constituent la paroi intérieure 1 et la paroi extérieure 2, et les parois horizontales constituent la paroi supérieure 3 et la paroi inférierure 4. La paroi 1 dépasse la paroi 3 et est surmontée d'une partie essentiellement plane 5 s'étendant dans un plan perpendiculaire à celui de la paroi 1. Les parois 1 et 5 se présentent, en section transversale, sous la forme d'un T. Les deux bords de la paroi 5 représentés comme des extrémités 51 et 52 de la partie horizontale T, sont plus grands en hauteur que l'épaisseur de la paroi 5. Les bords 51 et 52 sont donc formés de façon à pouvoir retenir un quelconque élément inséré en dessous de la paroi 5.

Le profilé comprend par ailleurs deux parties en saillie par rapport à la paroi 2. La partie supérieure, référencée 6, de ces deux éléments en saillie, constitue une piste de roulement 7 pour un élément coulissant et est limitée vers l'extérieur par un rebord double 8 qui dépasse la partie 6 aussi bien vers le haut que vers le bas.

La partie inférieure référencée 9, des deux parties en saillie par rapport à la paroi 2 s'étend dans un plan perpendiculaire à celui de la paroi 2 et porte à son extrémité libre un rebord 10 dépassant la paroi 9 vers le bas. Ce rebord peut servir à accrocher des éléments de fixation, par exemple une bâche, ou à des fins similaires.

La Figure 1 représente par ailleurs un profil clip 11 dans une position correspondant à un moment donné pendant la mise en place de cet élément de fixation. Ce profil clip 11 a pour fonction principale de maintenir en position la semelle 7, comme cela sera expliqué en référence à la Figure 2. Une fonction secondaire du profil clip 11 consiste en un maintien latéral des galets coulissant sur cette piste.

Le profil clip 11 est formé de façon à présenter deux extrémités crochues 111, 112. Alors que l'extrémité 112 a la forme d'une partie courbe avec un rayon relativement grand, l'extrémité 111 est formée comme un crochet barbe destiné à s'agripper à un bec 62 formé à la jonction entre la paroi 6 et la paroi 3, en regard d'une rainure 61 pratiquée dans l'angle formé par la paroi 6 et la partie supérieure du rebord 8.

La Figure 2 représente le profilé de la Figure 1 sans la semelle 7, mais avec le profil clip 11 mis en position de fixation. Cette représentation permet de montrer plus clairement la rainure 61. La rainure 61 est constituée en partie par un retrait dans la partie supérieure du rebord 8 et en partie par un retrait dans la paroi 6.

La rainure 61 permet de recevoir et de maintenir la semelle 7 sur la paroi 6, par un des deux bords latéraux de la semelle 7. L'autre bord longitudinal de la semelle 7 est retenue par l'extrémité crochue 111 du clip 11.

La paroi 3 se présente sous une forme étagée avec une partie 31 s'étendant dans un plan perpendiculaire à celui de la paroi 1, et une partie 32 à un niveau inférieur par rapport à la partie 31 et formée de façon à limiter avec un bec 33 prolongeant la partie 31, un creux dans lequel est insérée l'extrémité 112 du profil clip 11.

Lors de la mise en place de la semelle 7, celle-ci est introduite d'abord par le bord correspondant dans la rainure 61 et est rapprochée, et finalement posée sur, la paroi 6 par un mouvement de pivotement. Lorsque la semelle 7 est mise en place, le profil clip 11 est inséré, par son extrémité 112, en dessous du bec 33 et est mis en place par un mouvement de pivotement jusqu'à ce que son extrémité 111 s'accroche au bec 62.

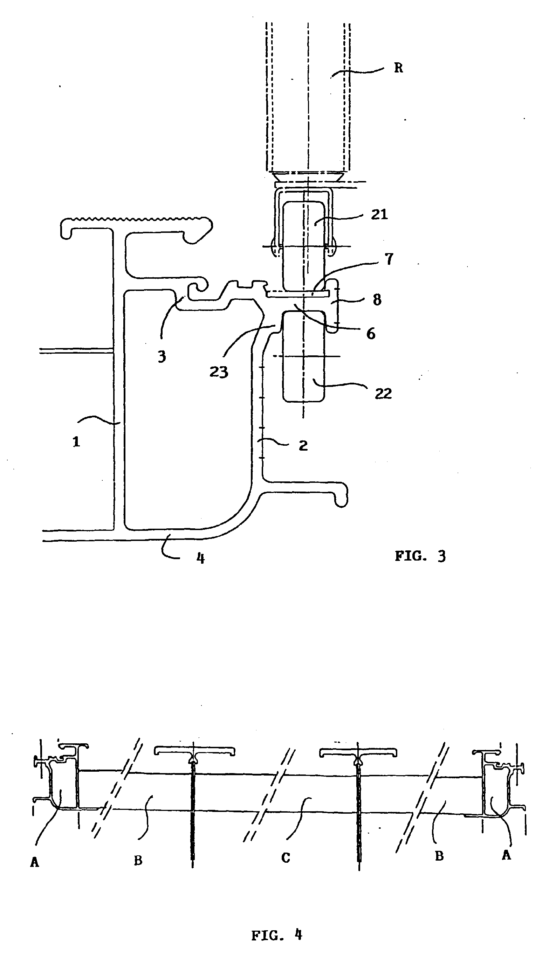

La Figure 3 montre un profilé selon l'invention avec une semelle 7 unique mise en place, mais sans le profil clip 11, et avec un pied d'un élément coulissant R tel qu'un rancher mobile ou un arceau coulissant d'une structure coulissante, avec des galets 21 et 22. Le galet supérieur 21 se déplace sur la semelle 7. Il est tenu latéralement par la partie supérieure du rebord 8 et par l'extrémité 111 du profil clip 11.

Le galet inférieur 22 est représentée comme roulant directement sur la face inférieure de la paroi 6. Toutefois, il est bien concevable de pourvoir la paroi 6 d'une seconde piste de roulement sur laquelle le galet 22 prend appui. Cette seconde piste n'est pas soumise à une usure aussi grande que la piste 7, car le poids des éléments coulissants n'y fait pas d'effet. Toutefois, cette seconde piste est exposée au moins autant, si non plus, aux effets de basculement des éléments coulissants. Le galet inférieur est tenu latéralement par la partie inférieure du rebord 8 et par une partie protubérante 23 de l'extrémité supérieure de la paroi 2.

Ainsi, l'élément coulissant R est maintenu en position latéralement par deux paires d'éléments limitateurs de mouvement latéral, à savoir par la partie supérieure du rebord 8 et l'extrémité 111 du profil clip 11, d'une part, et par la partie inférieure du rebord 8 et la partie protubérante 23, d'autre part.

La Figure 4 représente une application du profilé de l'invention. Cette application consiste en une plate-forme constituée d'un élément central C, de deux éléments adjacents B et de deux rives latérales A disposés respectivement de part et d'autre de l'ensemble B-C-B des éléments cités ci-avant. Il va s'en dire que la combinaison d'éléments B-C-B peut être remplacée par un élément unique et que cet élément unique tout aussi bien que les éléments B et C peuvent être des profilés en aluminium. De même, l'ensemble des éléments A-B-C-B-A constituant la plate-forme peuvent être réalisés sous la forme d'un seul profilé comprenant, de façon monobloc ou intégrée, les profilés selon l'invention avec les pistes de roulement.

En variante, il est concevable, sans sortir du principe de l'invention, que la piste de roulement soit située, pour une application donnée sur l'un ou l'autre des éléments B ou sur l'élément C. Dans ce cas, le revêtement de la piste de roulement avec une semelle, conformément à l'invention, s'applique de manière correspondante.

Les signes de référence insérés après les caractéristiques techniques mentionnées dans les revendications, ont pour seul but de faciliter la compréhension de ces dernières, et n'en limitent aucunement la portée.

## Revendications

1. Profilé pour une plate-forme d'un véhicule industriel, comprenant au moins une piste de roulement, caractérisé en ce que la piste comprend une semelle dure (7) constituée par un élément rapporté plat.

2. Profilé selon la revendication 1, caractérisé en ce que la semelle (7) est insérée dans une partie en retrait du profilé.

3. Profilé selon la revendication 1 ou 2, caractérisé en ce qu'il est pourvu, le long de la piste (7), d'une rainure (61) ouverte vers la piste (7) pour recevoir un bord longitudinal de la semelle (7).

4. Profilé selon l'une quelconque des revendications 1 à 3, caractérisé en ce que la semelle (7) est fixée dans le profilé par un profil clip (11).

5. Profilé selon l'une quelconque des revendications 1 à 4, caractérisé en ce que la semelle (7) est en un matériau ductile.

6. Profilé selon l'une quelconque des revendications 1 à 4, caractérisé en ce qu'il est aluminium et la semelle en inox.

7. Profilé selon l'une quelconque des revendications 1 à 6, caractérisé en ce qu'il comprend une seconde piste de roulement pourvue d'une semelle en un matériau dur.

8. Plate-forme pour un véhicule industriel, comprenant au moins une rive (4) pourvue d'une piste de roulement, caractérisée en ce que la piste comprend une semelle dure (7) constituée par un élément rapporté plat.

9. Plate-forme pour un véhicule industriel, comprenant au moins une rive (A) pourvue d'une piste de roulement, caractérisée en ce que la rive est réalisée sous la forme d'un profilé (A) selon l'une quelconque des revendications 1 à 7.

10. Véhicule industriel comprenant une plate-forme avec deux rives (A, A) dont au moins une rive (A) est pourvue d'une piste de roulement (7), caractérisé en ce que a piste comprend une semelle dure (7) constituée par un élément rapporté plat.

11. Véhicule industriel comprenant une plate-forme avec deux rives (A, A) dont au moins une est pourvue d'une piste de roulement (7), caractérisé en ce que la rive est réalisée sous la forme d'un profil (A) selon l'une quelconque des revendications 1 à 7.
